# EUROPÄISCHE PATENTSCHRIFT

(11) **EP 3 149 440 B1**
(45) Veröffentlichungstag und Bekanntmachung des Hinweises auf die Patenterteilung: **02.05.2018**
(21) Anmeldenummer: 15747361.2
(22) Anmeldetag: 20.05.2015
(51) Int. Cl.: G01L 5/28, B60T 17/22

(54) **VERFAHREN ZUR PRÜFUNG VON BREMSSYSTEMEN VON KRAFTFAHRZEUGEN**
METHOD FOR TESTING BRAKE SYSTEMS OF MOTOR VEHICLES
PROCÉDÉ DE CONTRÔLE DE SYSTÈMES DE FREINAGE DE VÉHICULES AUTOMOBILES

(30) Priorität: 28.05.2014 DE 102014008039
(43) Veröffentlichungstag der Anmeldung: 05.04.2017
(73) Patentinhaber: Dürr Somac GmbH, 09366 Stollberg (DE)
(72) Erfinder: ÖSTREICHER, Michael, 08315 Bernsbach (DE); SCHULTHEIS, Michael, 08056 Zwickau (DE)
(74) Vertreter: Patentanwälte Findeisen & Neumann
(86) Internationale Anmeldenummer: PCT/DE2015/000253
(87) Internationale Veröffentlichungsnummer: WO 2015/180702

(56) Entgegenhaltungen:
- DE-A1- 10 009 168
- DE-A1-102010 021 577
- DE-C1- 4 424 094
- DE-C2- 2 250 728

## Beschreibung

Die Erfindung betrifft ein Verfahren zur Prüfung von Bremssystemen von Kraftfahrzeugen im Fertigungsprozess an Montagelinien der Automobilhersteller, wobei das Bremspedal mittels einer automatisch gesteuerten Vorrichtung betätigt wird und wobei mittels zugeordneter Gerätetechnik der Pedalweg und die Pedalkraft gemessen werden.

Bremsanlagen von Kraftfahrzeugen stellen sicherheitsrelevante Baugruppen dar und müssen sowohl im Fertigungsprozess beim Automobilhersteller als auch bei späteren Fahrzeuginspektionen regelmäßig überprüft werden. Dabei werden die Bremssysteme in der Fertigung insbesondere nach der Befüllung mit Betriebsmitteln geprüft. Ziel dieser Prüfung ist es, eventuell vorhandene Lecks oder Lufteinschlüsse im System zu erkennen. Gleichzeitig sollen eine definierte Position des Hebelwerkes und eine Leichtgängigkeit der bewegbaren Komponenten im Bremssystem gewährleistet werden. Für solche Prüfungen sind bereits verschiedenartige technische Lösungen bekannt.

So beschreibt DE 100 09 168 A1 eine Vorrichtung mit magnetempfindlichen Bauteilen zur Erfassung einer vom Fahrer ausgeübten Pedalbetätigungskraft. Die Vorrichtung weist eine Trägerplatte mit einem zugeordneten Zungenelement auf, das mit Bolzen am Bremspedal montiert wird. Sobald das Bremspedal vom Fuß des Fahrers beaufschlagt wird, ändert sich die Relativposition zwischen Zungenelement und Trägerplatte. Somit ändert sich auch das in diesem Bereich vorhandene Magnetfeld in Abhängigkeit der Kraft, die auf das Pedal ausgeübt wird. Dies ermöglicht eine Aussage zur Pedalbetätigungskraft, ohne dass jedoch der zurückgelegte Pedalweg erfasst wird.

Aus DE 44 24 094 C1 ist hingegen eine Vorrichtung bekannt, bei deren Anwendung auch der Pedalweg berücksichtigt wird. Hierbei werden die Pedalbewegungen mit einem Sensor erfasst, der mit einer Auswerteeinrichtung verbunden ist.

In DE 2 250 728 C wird ein Pedalkraftmesser beschrieben, der ein Gehäuse, eine mit einer Pedalbetätigungskraft beaufschlagbare Trittplatte und eine Vorrichtung zur Abgabe eines von der Pedalbetätigungskraft abhängigen Signals umfasst. Das Gehäuse weist eine als Adapter ausgestaltete Grundplatte auf, mit der die gesamte Vorrichtung am Bremspedal lösbar befestigt werden kann. Die Grundplatte bildet gemeinsam mit einem umlaufenden Rahmen eine Kontur, die nach oben von der Trittplatte abgeschlossen wird.

Im Innenraum sind Messelemente angeordnet, mit denen die Kraftbeaufschlagung der Trittplatte ermittelt wird.

Eine aus der Designeintragung DE 403 06 723.5 bekannte Messvorrichtung enthält Kraft- und Wegsensoren und führt Betätigungen des Bremspedals aus. Dabei wird das Bremssystem in einem ersten Setzhub zunächst für die Prüfung konditioniert. Im dann folgenden Messhub erfolgt die Aufnahme einer Weg-Kraft-Kennlinie, aus der ein Pedalweg bei einer Prüfkraft bestimmt wird. Diese Kennlinie ermöglicht eine Detektion eventueller Störungen, z.B. Luft im hydraulischen System oder Funktionsfehler an Baugruppen. Danach wird ein Lecktest zur Bewertung der Dichtigkeit des Bremssystems durchgeführt.

Weiterhin betrifft DE 10 2010 021 577 A1 1 ein Verfahren zur Prüfung von Bremssystemen von Kraftfahrzeugen im Fertigungsprozess an Montagelinien der Automobilhersteller, wobei das Bremspedal mittels einer automatisch gesteuerten Vorrichtung betätigt wird und wobei mittels zugeordneter Gerätetechnik Pedalweg und Pedalkraft gemessen werden,

Obwohl bereits verschiedenartige technische Lösungen zur Prüfung von Bremssystemen von Kraftfahrzeugen bekannt sind, besteht weiterhin Einwicklungsbedarf. Ein wesentlicher Aspekt ist hierbei, dass sich die Beurteilung der Bremssysteme mit der allgemein üblichen Bremspedalprüftechnik bisher auf eine Bewertung von Pedalwegen und Pedalkräften bezüglich eventueller Restluft bzw. Leckage während der Betätigung des Bremspedals beschränkt. Bisher wird bei der Bewertung jedoch nicht berücksichtigt, dass sich der jeweilige Bremspedalweg als Summe einer Vielzahl von konstruktiven Einflussfaktoren der beteiligten Bremssystemkomponenten darstellt. Der bisher primär erfasste Restluftanteil ist lediglich einer dieser Einflussfaktoren.

Deshalb ergibt die bisher übliche Methode der Bewertung des Restluftanteils zwangsläufig einen hohen Anteil von Falschbeurteilungen, der sowohl zu einer falschen Einschätzung "Nicht in Ordnung" (nachfolgend als "NIO" bezeichnet) als auch zu einer falschen Einschätzung "In Ordnung" (nachfolgend als "IO" bezeichnet) führen kann. Demzufolge werden Fahrzeuge entweder wegen der vermeintlichen Bewertung als NIO unnötigerweise vom Montageband in eine Nacharbeit überführt oder trotz unzulässig hoher Restluftanteile als IO bewertet und nicht nachgebessert. Untersuchungen der Anmelderin haben ergeben, dass dieser Anteil insgesamt bis zu 30% betragen kann, wobei der Anteil tatsächlich zutreffender Bewertungen als NIO erfahrungsgemäß im Bereich kleiner 1% liegt.

Aufgabe der vorliegenden Erfindung ist es, ein Verfahren zur Prüfung von Bremssystemen von Kraftfahrzeugen zu schaffen, mit dem der Anteil einer falschen Bewertung als IO bzw. NIO deutlich reduziert werden kann. Hierfür soll insbesondere eine an sich bekannte Bremspedalprüfung mit einer automatisch gesteuerten Beaufschlagung des Bremspedals sowie einer Messung von Pedalweg und Pedalkraft so modifiziert werden, dass der Anteil falscher NIO-Bewertungen bezüglich der Restluft wesentlich und der Anteil falscher IO-Bewertungen zumindest auf einen unbedeutenden Anteil reduziert werden kann.

Diese Aufgabe wird mit den technischen Merkmalen gemäß Anspruch 1 gelöst, indem auf der Grundlage von Pedalweg und Pedalkraft eine Weg-Kraft-Kurve während der Pedalbewegung ermittelt wird, die mit einem physikalischen Bremssystemmodell ausgewertet wird, das konstruktive Einflüsse der einzelnen Komponenten des Bremssystems isoliert. Die Weg-Kraft-Kurve wird separiert in einen ersten Bereich, in dem sich nur Komponenten der Pedalmechanik bewegen, in einen zweiten, weitgehend linearen Bereich, in dem der Hauptbremszylinder in Bewegung gesetzt wird, in einen dritten gekrümmten Bereich und in einen vierten, weitgehend linearen Bereich, der als Gerade "g3" beschrieben wird. Am Übergang vom zweiten Bereich zum dritten Bereich wird ein aus der Kurvenform errechneter Fixpunkt festgelegt, durch den eine senkrecht angeordnete Gerade "g1" geführt wird. An der Schnittstelle der Geraden "g1" mit der Geraden "g3" wird ein Schnittpunkt festgelegt und es erfolgt eine Berechnung der sich zwischen ausgewählten Punkten ausbildenden Fläche als Bewertungsparameter für das Bremssystem. Weiterhin wird die Wegdifferenz zwischen unterschiedlichen Fixpunkten verschiedener Fahrzeuge bei der Berechnung des Pedalweges berücksichtigt. Hiermit kann der variable Einfluss des Lüftspiels auf den Pedalweg kompensiert werden. Weitere Details und Ausgestaltungen werden in einem Ausführungsbeispiel näher beschrieben.

Mit diesem Verfahrensablauf wird auswertungstechnisch eine Trennung der Anteile wesentlicher Komponenten des Bremssystems am Pedalweg erreicht. Dies ermöglicht eine getrennte Bewertung von Restluft, Bremssystemhydromechanik und Lüftspiel. Die bisher nicht zu vermeidende gegenseitige Kompensation verschiedener technischer Einflüsse auf den Pedalweg wird ausgeschlossen, so dass Fehlbewertungen erheblich reduziert werden.

Somit kann insbesondere das Lüftspiel an den Bremsscheiben in einfacher Weise bewertet und bei Notwendigkeit nachgestellt werden. Weiterhin wird eine eventuell notwendige Nachentlüftung des Bremssystems erkannt. Eine bisher nur subjektiv vom Fahrzeugführer empfundene Charakteristik am Bremspedal (insbesondere die zeitliche Verzögerung, bis das Lüftspiel überwunden ist und die Bremswirkung einsetzt) kann mit diesem Verfahren nunmehr objektiv erfasst und überwacht werden.

Das erfindungsgemäße Verfahren erhöht die erreichbare Trefferquote für tatsächlich als NIO zu bewertende Bremssysteme. Somit ergeben sich für den Automobilhersteller erhebliche Vorteile, weil kostenintensive Nacharbeiten aufgrund bisher falscher NIO-Bewertungen entfallen. Derartige Nacharbeiten werden jetzt nur noch bei tatsächlich vorliegenden Mängeln ausgelöst.

Gleichzeitig ist auch die korrekte IO-Bewertung für den Automobilhersteller enorm wichtig, da somit Qualitätsmängel, die sowohl die Fahrzeugsicherheit als auch das Image des Herstellers beeinträchtigen, weitgehend vermieden werden. Diese verbesserte Qualität der Bremspedalprüfung kann vom Automobilhersteller auch zur Überwachung der Güte der zugelieferten Bremskomponenten genutzt werden. Die Bremspedalprüfung gewinnt daher an Bedeutung für die Dokumentation der Betriebssicherheit des gesamten Bremssystems.

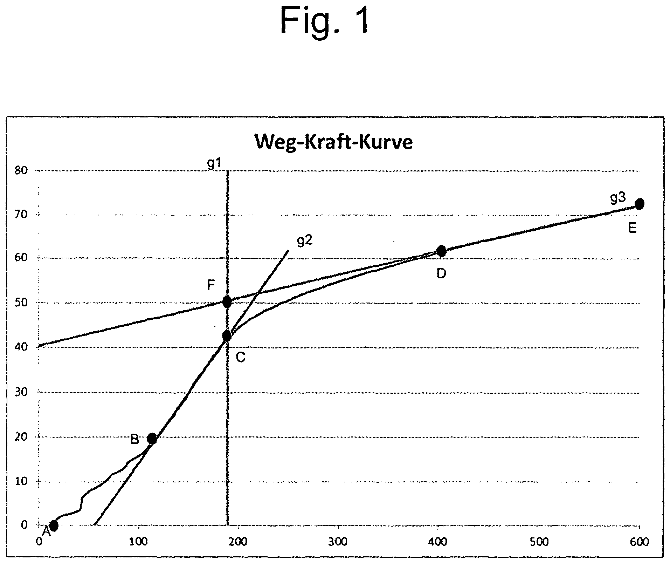

Nachfolgend wird ein Ausführungsbeispiel der Erfindung unter Bezugnahme auf die Zeichnung näher erläutert.

Die Abbildung zeigt eine typische Weg-Kraft-Kurve einer Bremspedalprüfung aus der laufenden Produktion eines Automobilherstellers.

Im Bereich der Kurve zwischen den Punkten A und B bewegen sich nur Komponenten der Pedalmechanik einschließlich des Bremskraftverstärkers, jedoch ohne Verstärkerwirkung.

Im Kurvenbereich zwischen Punkt B und C wird der Hauptbremszylinder in Bewegung gesetzt. Die Bremsbeläge liegen dabei noch nicht an, so dass auch kein nennenswerter Hydraulikdruck aufgebaut werden kann. Die Bewegung erfolgt nahezu linear. In diesem Bereich sind allerdings die Bewegungen der Dichtungen zu erkennen. Sofern genügend Messpunkte in einem linearen Zusammenhang zu finden sind, wird dieser Bereich durch eine Gerade "g2" beschrieben. Kriterium für diese Messpunkte ist eine festgelegte Korrelation.

Im weiteren Verlauf geht die Weg-Kraft-Kurve in einen gekrümmten Bereich über. Der Fixpunkt C wird bestimmt durch den Beginn der signifikanten Krümmung dieser Weg-Kraft-Kurve in Richtung des Punktes D. Der Punkt C ist die Stelle im Kurvenverlauf, an der sich der Hydraulikdruck merklich erhöht. Die senkrecht durch den Fixpunkt C gehende Gerade "g1" ist bei der Bestimmung der Nominalkurve von Bedeutung.

Im Kurvenbereich zwischen Punkt D und E sind die Kurvenpaare (Kraft; Weg) ausreichend linear, um diesen Bereich als Gerade "g3" beschreiben zu können. Als Kriterium wird eine lineare Korrelation herangezogen (>0,99). Die Gerade hat einen Anstieg "a", wobei mit "a" die "Elastizität" der Hydromechanik des Bremssystems beschrieben wird. Sie ist auch ein objektives Maß für die "Härte" der Bremse.

Die Krümmung der Kurve im Bereich zwischen Punkt C und D ist letztlich die Summe von mehreren Effekten bei der Erhöhung der Pedalkraft. Solche Effekte sind z.B. das im praktischen Betrieb ungleichmäßige Anlegen der Bremsbeläge und das Komprimieren von noch vorhandener Restluft. Um ein praktisch bewertbares Ergebnis zu erhalten, hat sich eine Berechnung der sich zwischen den Punkten C, E und F ausbildenden Fläche als Kriterium praktisch bewährt.

Das hier vorgeschlagene physikalische Bremssystemmodell beschreibt den Bereich zwischen den Punkten B und C als ein Lüftspiel, also als den Pedalwegbereich, bei dem sich die Bremsbeläge in Richtung der Bremsscheibe bewegen, ohne das ein merklicher Hydraulikdruck im Bremssystem erzeugt wird. Aus der Abbildung ist ersichtlich, dass das Lüftspiel als ein Teil des Pedalweges das Ergebnis beeinflusst und bei einer Beurteilung von Restluft anhand des Pedalweges einbezogen werden muss. Dieser Lösungsansatz wird mit dem vorgeschlagenen Verfahrensablauf praktisch realisiert.

Nach ersten firmeninternen Versuchen der Anmelderin ist festzustellen, dass der hierzu entwickelte Verfahrensablauf funktionsfähig ist. So wurde eine entsprechende Bewertung des Lüftspiels anhand einer Testreihe von fast 3.800 Fahrzeugen durchgeführt. Die vorab detektierte Rate einer NIO-Bewertung bezüglich des Pedalweges betrug bei einem Toleranzband von +/- 7 mm 0,8%. Dies entspricht 29 Fahrzeugen. Mit Hilfe der neuartigen Lüftspielberechnung beträgt die NIÖ-Rate nur noch 0,2% bzw. 9 Fahrzeuge. Demzufolge war es nicht notwendig, die vorab detektierten 29 Fahrzeuge der Nacharbeit zuzuführen, sondern lediglich 9 Fahrzeuge. Somit konnte die tatsächlich notwendige Nacharbeit um insgesamt 20 Fahrzeuge reduziert werden.

## Patentansprüche

1. Verfahren zur Prüfung von Bremssystemen von Kraftfahrzeugen im Fertigungsprozess an Montagelinien der Automobilhersteller, wobei das Bremspedal mittels einer automatisch gesteuerten Vorrichtung betätigt wird und wobei mittels zugeordneter Gerätetechnik der Pedalweg und die Pedalkraft gemessen werden, **dadurch gekennzeichnet,**
**dass** auf Grundlage von Pedalweg und Pedalkraft eine Weg-Kraft-Kurve während der Pedalbewegung ermittelt wird,
die mit einem physikalischen Bremssystemmodell ausgewertet wird,
wobei dieses Bremssystemmodell konstruktive Einflüsse der einzelnen Komponenten des Bremssystems isoliert, indem die Weg-Kraft-Kurve separiert wird in
einen ersten Bereich (AB), in dem sich nur Komponenten der Pedalmechanik bewegen,
einen zweiten, weitgehend linearen Bereich (BC), in dem der Hauptbremszylinder in Bewegung gesetzt wird, wobei dieser Bereich als eine Gerade "g2" beschrieben wird, einen dritten gekrümmten Bereich (CD),
einen vierten, weitgehend linearen Bereich (DE), wobei dieser Bereich als eine Gerade "g3" beschrieben wird,
wobei am Übergang vom zweiten Bereich (BC) zum dritten Bereich (CD) ein aus der Kurvenform errechneter Fixpunkt (C) festgelegt wird, durch den eine senkrecht angeordnete Gerade "g1" geführt wird,
wobei an der Schnittstelle der Geraden "g1" mit der Geraden "g3" ein Schnittpunkt "F" festgelegt wird,
wobei eine Berechnung der sich zwischen den Punkten ,,"C - E - F" ausbildenden Fläche als Bewertungsparameter für das Bremssystem erfolgt und
wobei die Wegdifferenz zwischen unterschiedlichen Fixpunkten verschiedener Fahrzeuge bei der Berechnung des Pedalweges berücksichtigt wird.

2. Verfahren nach Anspruch 1, **dadurch gekennzeichnet,**
**dass** eine festgelegte Korrelation Kriterium für die Messpunkte der Gerade "g2" ist.

3. Verfahren nach Anspruch 1, **dadurch gekennzeichnet,**
**dass** eine lineare Korrelation Kriterium für die Messpunkte der Gerade "g3" ist.

## Claims

1. A method for testing brake systems of motor vehicles in the manufacturing process at assembly lines of automobile manufacturers, wherein the brake pedal is operated using an automatically controlled device and wherein the pedal travel and pedal force are measured, using associated instruments, **characterized in that** a travel-force curve is determined, based on pedal travel and pedal force during pedal movement,
which is analyzed using a physical brake system model,
wherein the brake system model isolates design influences by individual components of the brake system by dividing the travel-force curve into a first section (AB) in which only the components of the pedal mechanism are moving,
a second, mostly linear section (BC), in which the brake master cylinder is set in motion, wherein this section is described by the straight line "g2",
a third, curved section (CD),
a fourth, mostly linear section (DE), wherein this section is described by the straight line "g3",
wherein a benchmark (C) calculated from the shape of the curve, through which a vertical straight line "g1" is routed, is determined at the transition from the second (BC) to the third (CD) section,
wherein a junction "F" is determined at the intersection of the straight line "g1" and the straight line "g3",
wherein the area forming between points "C - E - F" is calculated as an evaluation parameter for the brake system, and
wherein the travel difference between different benchmarks of various vehicles is taken into consideration when calculating the pedal travel.

2. The method according to claim 1, **characterized in that**
a specified correlation is the criterion for the measuring points of the straight line "g2".

3. The method according to claim 1, **characterized in that**
a linear correlation is the criterion for the measuring points of the straight line "g3".

## Revendications

1. Procédé de contrôle de systèmes de freinage de véhicules automobiles pour le processus de fabrication sur lignes de montage des constructeurs automobiles, où la pédale de frein est enfoncée au moyen d'un dispositif à commande automatique et où, à l'aide d'appareils associés, sont mesurées la course pédale et la puissance de pédalage, **caractérisé en ce**
**que**, sur la base de la course pédale et de la puissance de pédalage, une courbe déplacement-force est déterminée lors du mouvement de la pédale, ladite courbe étant évaluée au moyen d'un modèle physique de système de freinage,
**que** ce modèle physique de système de freinage assure l'isolation d'influences constructives des composants individuels du système de freinage, ceci en séparant la courbe déplacement-force en
une première zone (AB) dans laquelle ne se déplacent que des composants de la mécanique des pédales,
en une deuxième zone largement linéaire (BC) dans laquelle est mis en mouvement le maître-cylindre de frein, cette zone étant décrite comme ligne droite "g2", en une troisième zone courbée (CD),
en une quatrième zone largement linéaire (DE), cette zone étant décrite comme ligne droite "g3",
où est défini, au niveau du passage de la deuxième zone (BC) à la troisième zone (CD), est déterminé un point fixe (C) qui, lui, est calculé sur la base de la forme de courbe et par lequel est conduite une ligne droite "g1" verticalement disposée,
où est déterminée, au niveau de l'interface entre la ligne droite "g1" et la ligne droite "g3", une intersection "F",
où est effectué, dans le but de servir de paramètre de valorisation au système de freinage, un calcul de la surface qui se forme entre les points "C - E - F", et où est prise en compte, lors du calcul de la course de pédale, la différence de parcours entre les différents points fixes de véhicules automobiles différents.

2. Procédé suivant la revendication 1, **caractérisé en ce**
**qu'**une corrélation définie sert de critère déterminant aux points de mesure de la ligne droite "g2".

3. Procédé suivant la revendication 1, **caractérisé en ce**
**qu'**une corrélation linéaire sert de critère déterminant aux points de mesure de la ligne droite "g3".
